# FASCICULE DE BREVET EUROPEEN

(11) **EP 3 155 073 B1**
(45) Date de publication et mention de la délivrance du brevet: **10.10.2018**
(21) Numéro de dépôt: 15726640.4
(22) Date de dépôt: 09.06.2015
(51) Int. Cl.: C10G 45/08, B01J 21/12, B01J 23/04, B01J 27/16, B01J 35/10, B01J 37/03, B01J 37/08, B01J 37/02, B01J 21/04, B01J 23/88, B01J 23/882, B01J 23/883, B01J 23/888, B01J 27/19, B01J 37/00, C10G 45/50

(54) **PROCEDE D'HYDROTRAITEMENT DE COUPES DISTILLATS UTILISANT UN CATALYSEUR A BASE D'UNE ALUMINE MESOPOREUSE AMORPHE AYANT UNE CONNECTIVITE ELEVEE**
VERFAHREN ZUR HYDROBEHANDLUNG VON DESTILLATSCHNITTEN UNTER VERWENDUNG EINES KATALYSATORS AUS EINEM MESOPORÖSEN AMORPHEN ALUMINIUMOXID MIT HOHER KONNEKTIVITÄT
METHOD FOR THE HYDROTREATMENT OF DISTILLATE CUTS USING A CATALYST MADE FROM AN AMORPHOUS MESOPOROUS ALUMINA HAVING HIGH CONNECTIVITY

(30) Priorité: 13.06.2014 FR 1455425
(43) Date de publication de la demande: 19.04.2017
(73) Titulaire: IFP Energies nouvelles, 92500 Rueil-Malmaison (FR)
(72) Inventeur: BOUALLEG, Malika, F-69100 Villeurbanne (FR); HUGON, Antoine, F-69700 Givors (FR)
(74) Mandataire: IFP Energies nouvelles
(86) Numéro de dépôt international: PCT/EP2015/062826
(87) Numéro de publication internationale: WO 2015/189200

(56) Documents cités:
- WO-A1-00/41811
- FR-A1- 2 972 648
- US-A1- 2011 000 824
- US-A1- 2012 122 659
- HAILING LIU ET AL: "Determination of the connectivity of porous solids from nitrogen sorption measurements - II. Generalisation", CHEMICAL ENGINEERING SCIENCE, vol. 47, no. 17-18, 1 décembre 1992 (1992-12-01), pages 4393-4404, XP055165768, ISSN: 0009-2509, DOI: 10.1016/0009-2509(92)85117-T cité dans la demande

## Description

### Domaine technique

L'invention concerne les procédés d'hydrotraitement de charges hydrocarbonées présentant une température moyenne pondérée (TMP) supérieure à 380°C. De préférence, la charge hydrocarbonée mise en oeuvre dans le procédé selon l'invention est une charge de type de type distillat sous vide (DSV).

L'objectif du procédé selon l'invention est essentiellement la purification desdits charges hydrocarbonées et en particulier de distillats.

En particulier, la présente invention se rapporte à l'utilisation dans un procédé d'hydrotraitement d'une charge hydrocarbonée présentant une température moyenne pondérée (TMP) supérieure à 380°C, d'un catalyseur comprenant au moins un métal du groupe VIB et/ou au moins un métal du groupe VIII de la classification périodique et un support comprenant une alumine mésoporeuse amorphe présentant une connectivité très élevée ainsi qu'avantageusement une distribution poreuse spécifique par rapport aux alumines de l'art antérieur. Ladite alumine mésoporeuse amorphe est avantageusement mise en forme à partir d'un gel d'alumine présentant une haute dispersibilité, ledit gel d'alumine étant lui-même obtenu par précipitation d'au moins un sel d'aluminium selon un procédé spécifique.

Plus particulièrement, la présente invention se rapporte à l'utilisation dans un procédé d'hydrotraitement de ladite charge hydrocarbonée d'un catalyseur comprenant un support comprenant une alumine mésoporeuse amorphe mise en forme à partir d'un gel d'alumine, ledit gel d'alumine étant préparée selon un procédé de préparation par précipitation spécifique, permettant l'obtention d'au moins 40% poids d'alumine en équivalent Al₂O₃ par rapport à la quantité totale d'alumine formée à l'issue de la ou les étapes de précipitation et plus généralement à l'issue des étapes de préparation du gel d'alumine, dès la première étape de précipitation, la quantité d'alumine formée à l'issue de la première étape de précipitation pouvant même atteindre 100%.

### État de la technique antérieure

De façon générale, il est admis qu'un catalyseur d'hydrotraitement présentant un fort potentiel catalytique se caractérise par une fonction hydro-déshydrogénante optimisée, c'est à dire une phase active parfaitement dispersée à la surface du support et présentant une teneur en métal élevée. Idéalement, quelle que soit la nature de la charge hydrocarbonée à traiter, le catalyseur doit pouvoir présenter une accessibilité des sites actifs vis-à-vis des réactifs et produits de réactions tout en développant une surface active élevée, ce qui conduit à des contraintes spécifiques en terme de structure et de texture propres au support oxyde constitutif desdits catalyseurs.

La composition et l'utilisation de catalyseurs classiques d'hydrotraitement de charges hydrocarbonées sont bien décrits dans l'ouvrage "Hydrocracking Science and Technology", 1996, J. Scherzer, A. J. Gruia, Marcel Dekker Inc et dans l'article de B. S. Clausen, H. T. Topsøe, F. E. Massoth, issu de l'ouvrage "Catalysis Science and Technology", 1996, volume 11, Springer-Verlag. Ainsi, ces catalyseurs se caractérisent généralement par la présence d'une phase active à base d'au moins un métal du groupe VIB et/ou au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique ou bien à l'état supporté mettant alors en jeu un solide poreux de nature différente. Dans ce dernier cas, le support poreux est généralement un oxyde amorphe ou mal cristallisé tel que par exemple une alumine, ou un aluminosilicate, éventuellement associé à un matériau zéolithique ou non. Après préparation, le métal du groupe VIB et/ou le métal du groupe VIII constitutif(s) desdits catalyseurs se présente(nt) souvent sous forme d'oxyde. La forme active et stable desdits catalyseurs pour les procédés d'hydrotraitement étant la forme sulfurée, ces catalyseurs doivent subir une étape de sulfuration. Celle-ci peut être réalisée dans l'unité du procédé associé, on parle alors de sulfuration in-situ, ou préalablement au chargement du catalyseur dans l'unité, on parle alors de sulfuration ex-situ.

Les méthodes usuelles conduisant à la formation de la phase active des catalyseurs d'hydrotraitement consistent en un dépôt de précurseur(s) moléculaire(s) d'au moins un métal du groupe VIB et/ou au moins un métal du groupe VIII sur un support oxyde par la technique dite "d'imprégnation à sec" suivi des étapes de maturation, séchage et calcination conduisant à la formation de la forme oxydée du(des)dit(s) métal(aux) employé(s). Vient ensuite l'étape finale de sulfuration génératrice de la phase active comme mentionné ci-dessus.

En particulier, le brevet US 7 790 652 décrit un nouveau support alumine présentant une distribution poreuse bien spécifique, pouvant être utilisé comme support de catalyseur dans un procédé d'hydroconversion de charges hydrocarbonées lourdes. Ledit support comprenant de l'alumine présente un diamètre moyen des pores compris entre 100 et 140 A, une distribution de taille dont la largeur est de moins de 33 A, un volume poreux d'au moins 0,75 ml/g dans lequel moins de 5% du volume poreux dudit support est présent dans les pores ayant un diamètre supérieur à 210 A.

Ledit support utilisé en combinaison avec une phase active hydrogénante permet d'obtenir des performances catalytiques inattendues dans le cas où il est utilisé en hydroconversion des charges lourdes ayant de préférence une majorité de ses composants bouillant à une température supérieure à 343°C. En particulier, le procédé d'hydroconversion de charges lourdes selon le brevet US 7 790 652 permet d'obtenir une conversion des composés hydrocarbonés bouillant à une température supérieure à 524°C fortement améliorée par rapport aux conversions obtenues avec des catalyseurs classiques de l'art antérieur.

Ledit support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine a former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de traitement thermique ou mûrissement préalable, pour produire une poudre d'alumine qui est ensuite mise en forme selon les méthodes connues de l'homme du métier puis calciné pour produire le support alumine final.
La première étape de précipitation du procédé de préparation du brevet US 7 790 652 est limitée à une production d'alumine faible, comprise entre 25 et 35% poids, car une production d'alumine plus élevée à l'issue de la première étape ne permet pas une filtration optimale du gel obtenu. Par ailleurs, l'augmentation de la production d'alumine dans la première étape du brevet US 7 790 652 ne permettrait pas la mise en forme du gel ainsi obtenu.

FR 2 972 648 divulgue un procédé d'hydrotraitement utilisant un catalyseur à base d'alumine. La demanderesse a découvert que l'utilisation dans un procédé d'hydrotraitement d'au moins une charge carbonée présentant une température moyenne pondérée (TMP) supérieure à 380°C, d'au moins un catalyseur comprenant au moins un métal du groupe VIB et/ou au moins un métal du groupe VIII de la classification périodique et un support comprenant une alumine mésoporeuse amorphe présentant une connectivité très élevée, permettait l'obtention d'une activité catalytique améliorée par rapport à des catalyseurs d'hydrotraitement de l'art antérieur. En particulier, dans le cas où ledit procédé selon l'invention est placé en amont d'une unité d'hydrocraquage de ladite charge, le procédé selon l'invention utilisant le ou lesdits catalyseur(s) comprenant le support alumine spécifique permet une meilleure déazotation de ladite charge que les procédés de l'art antérieur utilisant des catalyseurs d'hydrotraitement classiques, ainsi qu'une meilleure hydrogénation des aromatiques contenus dans ladite charge. De même, dans le cas où ledit procédé selon l'invention est placé en amont d'une unité de craquage catalytique en lit fluidisé de ladite charge, le procédé selon l'invention utilisant le ou lesdits catalyseur(s) comprenant le support alumine spécifique permet une meilleure désulfuration de ladite charge par rapport aux procédés de l'art antérieur.

Un objectif de la présente invention est donc de fournir un procédé d'hydrotraitement d'au moins une charge hydrocarbonée présentant une température moyenne pondérée (TMP) supérieure à 380°C mettant en oeuvre au moins un catalyseur présentant des performances catalytiques améliorées, notamment en terme de déazotation de ladite charge et d'hydrogénation des aromatiques contenus dans ladite charge dans le cas où ledit procédé d'hydrotraitement selon l'invention est placé en amont d'une unité d'hydrocraquage de ladite charge et en terme d'hydrodésulfuration de ladite charge dans le cas où ledit procédé selon l'invention est placé en amont d'une unité de craquage catalytique en lit fluidisé de ladite charge.

### Résumé et intérêt de l'invention

Un des avantages de la présente invention réside dans la mise en oeuvre, dans un procédé d'hydrotraitement d'au moins une charge hydrocarbonée présentant une température moyenne pondérée (TMP) supérieure à 380°C, d'un catalyseur à base d'un support comprenant une alumine dont la porosité est très connectée, c'est-à-dire présentant un nombre de pores adjacents à un pore donné très important. Une connectivité élevée représente un avantage important pour la diffusion des molécules de ladite charge à traiter lors de la mise en oeuvre du procédé d'hydrotraitement selon l'invention utilisant ce matériau. Une meilleure diffusion des réactifs permet d'avoir une concentration plus homogène au sein du catalyseur et permet donc à une plus grande majorité des sites catalytiques de travailler au mieux de ses possibilités.

Dans toute la suite du texte, la connectivité de l'alumine selon l'invention est définie comme étant le nombre de pores adjacents à un pore donné. La connectivité de l'alumine selon l'invention est représentative de la totalité de la porosité de l'alumine et en particulier de la totalité de la mésoporosité de l'alumine, c'est-à-dire de la totalité des pores ayant un diamètre moyen compris entre 2 et 50 nm.

La connectivité est une grandeur relative mesurée selon la procédure décrite dans la publication de Seaton (Liu H., Zhang L., Seaton N.A., Chemical Engineering Science, 47, 17-18, pp.4393-4404, 1992). Il s'agit d'une simulation Monte-Carlo à partir des isothermes d'adsorption/désorption d'azote. Ces paramètres de connectivité sont basés sur la théorie de la percolation. La connectivité est relié aux nombres de pores adjacents et une connectivité élevée représente un avantage pour la diffusion lors des réactions catalytiques des molécules à traiter.

L'objet de l'invention est un procédé d'hydrotraitement d'au moins une charge hydrocarbonée présentant une température moyenne pondérée (TMP) supérieure à 380°C, opérant à une température comprise entre 250°C et 4 30°C, à une pression totale comprise entre 4 MPa et 20 MPa avec un ratio volume d'hydrogène par volume de charge hydrocarbonée compris entre 200 et 2000 litres par litre et à une Vitesse Volumique Horaire (VVH) définie par le rapport du débit volumique de charge hydrocarbonée liquide par le volume de catalyseur chargé dans le réacteur comprise entre 0,5 et 5 h⁻¹, ledit procédé utilisant au moins un catalyseur comprenant au moins un métal du groupe VIB et/ou au moins un métal du groupe VIII de la classification périodique et un support comprenant une alumine mésoporeuse amorphe, ledit procédé comprenant au moins les étapes suivantes de préparation de ladite alumine :
a) au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 40 et 100%, le taux d'avancement étant défini comme étant la proportion d'alumine formée en équivalent Al₂O₃ lors de ladite étape a) de précipitation par rapport à la quantité totale d'alumine formée à l'issue de la ou les étapes de précipitation et plus généralement à l'issue des étapes de préparation du gel d'alumine, ladite étape a) opérant à une température comprise entre 10 et 50 °C, et pendant une durée comprise entre 2 minutes et 30 minutes,
b) une étape de traitement thermique de la suspension obtenue à l'issue de l'étape a), à une température comprise entre 50 et 200°C pendant une durée comprise entre 30 minutes et 5 heures,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'un flux d'air contenant jusqu'à 60% en volume d'eau.

Un avantage de l'invention est de fournir un procédé d'hydrotraitement utilisant un catalyseur dont le support alumine est préparé selon un procédé de préparation bien spécifique, permettant la mise en forme d'un gel d'alumine très dispersible, lui même préparé à partir d'une étape de précipitation dans laquelle au moins 40% poids d'alumine en équivalent Al₂O₃ par rapport à la quantité totale d'alumine formée à l'issue dudit procédé de préparation du gel, sont formés dés la première étape de précipitation. Ce procédé est réalisé grâce à la mise en oeuvre d'une étape de traitement thermique et en particulier une étape de murissement permettant l'obtention d'un gel d'alumine présentant une filtrabilité améliorée, et facilitant sa mise en forme.

### Définitions et méthodes de mesure

Dans toute la suite du texte, l'indice de dispersibilité est défini comme le pourcentage en poids de gel d'alumine peptisée que l'on peut disperser par centrifugation dans un tube en polypropylène à 3600G pendant 10 min.

La dispersibilité est mesurée en dispersant 10% de boehmite ou gel d'alumine dans une suspension d'eau contenant également 10% d'acide nitrique par rapport à la masse de boehmite. Puis, on centrifuge la suspension à 3600G rpm pendant 10 min. Les sédiments recueillis sont séchés à 100°C une nuit puis pesés.

On obtient l'indice de dispersibilité, noté ID par le calcul suivant : ID(%)=100%-masse de sédiments séchés(%).

Dans toute la suite du texte, la connectivité de l'alumine utilisée comme support de catalyseur ou du catalyseur utilisé dans le procédé selon l'invention est définie comme étant le nombre de pores adjacents à un pore donné. La connectivité selon l'invention est déterminée à partir des isothermes d'adsorption/désorption d'azote, est représentative de la totalité de la porosité de l'alumine ou du catalyseur et en particulier de la totalité de la mésoporosité de l'alumine, c'est-à-dire de la totalité des pores ayant un diamètre moyen compris entre 2 et 50 nm.

La connectivité est une grandeur relative mesurée selon la procédure décrite dans la publication de Seaton (Liu H., Zhang L., Seaton N.A., Chemical Engineering Science, 47, 17-18, pp.4393-4404, 1992). Il s'agit d'une simulation Monte-Carlo à partir des isothermes d'adsorption/désorption d'azote. Ces paramètres de connectivité sont basés sur la théorie de la percolation. La connectivité est relié aux nombres de pores adjacents et une connectivité élevée représente un avantage pour la diffusion lors des réactions catalytiques des molécules à traiter.

L'alumine et le catalyseur utilisés dans le procédé selon la présente invention présente en outre une distribution poreuse spécifique, dans lesquels les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, la distribution poreuse mesurée par porosimétrie au mercure est déterminée par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur ».

On fixe à 0,2 MPa la valeur à partir de laquelle le mercure remplit tous les vides intergranulaires, et on considère qu'au-delà le mercure pénètre dans les pores de l'alumine.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume macroporeux du catalyseur est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian des mésopores (Dp en nm) comme étant un diamètre tel que tous les pores de taille inférieure à ce diamètre constituent 50% du volume mésoporeux, mesuré par porosimétrie au mercure.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P₀= 0,99, pression pour laquelle il est admis que l'azote a rempli tous les pores.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### Description de l'invention

L'invention concerne un procédé d'hydrotraitement d'au moins une charge hydrocarbonée présentant une température moyenne pondérée (TMP) supérieure à 380°C.

### Charges

Des charges très variées peuvent être traitées par les procédés d'hydrocraquage selon l'invention. La charge mise en oeuvre dans le procédé d'hydrocraquage selon l'invention est une charge hydrocarbonée présentant une température moyenne pondérée (TMP) supérieure à 380°C. La TMP est définie à partir de la température à laquelle distillent 5%, 50% et 70% du volume de la charge selon la formule suivante : TMP = (T 5% + 2 x T 50% + 4 x T 70%)/ 7. La TMP est calculée à partir de valeurs de distillation simulée. La TMP de la charge est supérieure à 380°C et de préférence inférieure 600°C, et de manière plus préférée inférieure à 580°C. La charge hydrocarbonée traitée a généralement un intervalle de distillation compris entre 250°C et 600°C, de préférence entre 300 et 580°C.

Dans la suite du texte, nous appellerons conventionnellement cette charge distillat sous vide, mais cette désignation n'a aucun caractère restrictif. Toute charge hydrocarbonée contenant du soufre et des composés azotés inhibiteurs de l'hydrotraitement, et une TMP similaire à celle d'une coupe distillat sous vide peut être concernée par le procédé objet de la présente invention. La charge hydrocarbonée peut être de nature chimique quelconque, c'est à dire posséder une répartition quelconque entre les différentes familles chimiques notamment les paraffines, oléfines, naphtènes et aromatiques.

De préférence, ladite charge traitée dans le procédé selon l'invention est une charge hydrocarbonée dont au moins 50% poids des composés présentent un point d'ébullition initial supérieur à 340°C et un point d'ébullition final inférieur à 540°C, de préférence dont au moins 60% poids, de manière préférée dont au moins 75% poids et de manière plus préférée dont au moins 80% poids des composés présentent un point d'ébullition initial supérieur à 340°C et un point d'ébullition final inférieur à 540°C.

Ladite charge hydrocarbonée est avantageusement choisie parmi les distillats sous vide (ou DSV), les effluents issus d'une unité de craquage catalytique FCC (Fluid Catalytic Cracking selon la terminologie anglo-saxonne), les gazoles légers issus d'une unité de craquage catalytique (ou LCO pour Light Cycle Oil selon la terminologie anglo-saxonne), les huiles de coupe lourde (HCO pour Heavy Cycle Oil selon la terminologie anglo-saxonne), les effluents paraffiniques issus de la synthèse Fischer-Tropsch, les effluents issus de la distillation sous vide, tels que par exemple les fractions gazoles de type VGO (Vacuum Gas Oil selon la terminologie anglo-saxonne), les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, pris seuls ou en mélange.

De préférence, ladite charge hydrocarbonée est une coupe distillat sous vide. La coupe distillat sous vide est généralement issue de la distillation sous vide du pétrole brut. Ladite coupe distillat sous vide comprend des composés aromatiques, des composés naphténiques et/ou des composés paraffiniques.

Ladite coupe distillat sous vide peut éventuellement comprendre des hétéroatomes choisis parmi l'azote, le soufre et le mélange de ces deux éléments. Lorsque l'azote est présent dans ladite charge à traiter, la teneur en azote est supérieure ou égale à 300 ppm, de préférence ladite teneur est comprise entre 300 et 10000 ppm poids, de manière préférée entre 500 et 10000 ppm poids, de manière plus préférée entre 700 et 4000 ppm poids et de manière encore plus préférée entre 1000 et 4000 ppm. Lorsque le soufre est présent dans ladite charge à traiter, la teneur en soufre est comprise entre 0,01 et 5% poids, de manière préférée comprise entre 0,2 et 4% poids et de manière encore plus préférée entre 0,5 et 3% poids.

Ladite coupe distillat sous vide peut éventuellement également contenir des métaux, en particulier du nickel et du vanadium. La teneur cumulée en nickel et vanadium de ladite coupe distillat sous vide est de préférence inférieure à 1 ppm poids. La teneur en asphaltènes de ladite charge hydrocarbonée est généralement inférieure à 3000 ppm, de manière préférée inférieure à 1000 ppm, de manière encore plus préférée inférieure à 200 ppm.

Dans un mode de réalisation préféré, ladite charge hydrocarbonée de type distillat sous vide (ou DSV) peut être utilisée telle quelle, c'est-à-dire seule ou en mélange avec d'autres coupes hydrocarbonées, de préférence choisies parmi les effluents issus d'une unité de craquage catalytique FCC (Fluid Catalytic Cracking selon la terminologie anglo-saxonne), les gazoles légers issus d'une unité de craquage catalytique (ou LCO pour Light Cycle Oil selon la terminologie anglo-saxonne), les huiles de coupe lourde (HCO pour Heavy Cycle Oil selon la terminologie anglo-saxonne), les résidus atmosphériques et de résidus sous vide issus de la distillation atmosphérique et sous vide du pétrole brut, les effluents paraffiniques issus de la synthèse Fischer- Tropsch, les effluents issus de la distillation sous vide, tels que par exemple les fractions gazoles de type VGO (Vacuum Gas Oil selon la terminologie anglo-saxonne), les huiles désalphaltées ou DAO (Deasphalted Oil selon la terminologie anglo-saxonne), les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, prises seules ou en mélange.

Dans le cas préféré ou ladite charge hydrocarbonée de type distillat sous vide (ou DSV) est utilisée en mélange avec d'autres coupes hydrocarbonées, lesdites coupes hydrocarbonées ajoutées seules ou en mélange, sont présentées à au plus 50% poids dudit mélange, de préférence à au plus 40% poids, de manière préférée à au plus 30% poids et de manière plus préférée à au plus 20% poids dudit mélange.

Conformément à l'invention, le procédé d'hydrotraitement de ladite charge hydrocarbonée selon l'invention est mis en oeuvre à une température comprise entre 250°C et 430°C, de préférence entre 350°C et 405°C à une pression totale comprise entre 4 MPa et 20 MPa et de préférence entre 6 MPa et 15 MPa avec un ratio volume d'hydrogène par volume de charge hydrocarbonée compris entre 200 et 2000 litres par litre et de préférence compris entre 250 et 1400 litres par litre et à une Vitesse Volumique Horaire (VVH) définie par le rapport du débit volumique de charge hydrocarbonée liquide par le volume de catalyseur chargé dans le réacteur comprise entre 0,5 et 5 h⁻¹, et de préférence entre 0,7 et 3 h⁻¹.

Selon un premier mode de réalisation, ledit procédé d'hydrotraitement selon l'invention peut avantageusement être mis en oeuvre en amont d'une unité d'hydrocraquage de ladite charge hydrocarbonée.

Dans ce cas, ledit procédé d'hydrotraitement selon l'invention opère avantageusement à une température comprise entre 350 et 430°C, de préférence entre 350 et 405°C à une pression totale comprise entre 8 MPa et 20 MPa et de préférence entre 9 MPa et 15 MPa avec un ratio volume d'hydrogène par volume de charge hydrocarbonée compris entre 200 et 2000 litres par litre et de préférence compris entre 500 et 1200 litres par litre et à une Vitesse Volumique Horaire (WH) définie par le rapport du débit volumique de charge hydrocarbonée liquide par le volume de catalyseur chargé dans le réacteur comprise entre 0,5 et 5 h⁻¹, et de préférence entre 1 et 3 h⁻¹.

Selon un deuxième mode de réalisation, ledit procédé d'hydrotraitement selon l'invention peut avantageusement être mis en oeuvre en amont d'une unité de craquage catalytique en lit fluidisé de ladite charge hydrocarbonée.

Dans ce cas, ledit procédé d'hydrotraitement selon l'invention opère avantageusement à une température comprise entre 250°C et 420°C, de préférence entre 340°C et 400°C à une pression totale comprise entre 4 MPa et 15 MPa et de préférence entre 4 MPa et 12 MPa avec un ratio volume d'hydrogène par volume de charge hydrocarbonée compris entre 200 et 2000 litres par litre et de préférence compris entre 250 et 800 litres par litre et à une Vitesse Volumique Horaire (WH) définie par le rapport du débit volumique de charge hydrocarbonée liquide par le volume de catalyseur chargé dans le réacteur comprise entre 0,5 et 5 h⁻¹, et de préférence entre 0,7 et 2 h⁻¹.

Conformément à l'invention, le catalyseur utilisé dans ledit procédé d'hydrotraitement comprend au moins un métal du groupe VIB et/ou au moins un métal du groupe VIII de la classification périodique et un support comprenant et de préférence constitué d'une alumine mésoporeuse amorphe présentant une connectivité (Z) supérieure à 2,7.

De préférence, les éléments du groupe VIII sont choisis parmi les métaux nobles et non nobles du groupe VIII et de préférence parmi le fer, le cobalt, le nickel, le ruthénium, le rhodium, le palladium, l'osmium, l'iridium ou le platine, pris seuls ou en mélange et de manière préférée parmi le cobalt et le nickel, pris seuls ou en mélange.

Dans le cas où les éléments du groupe VIII sont choisis parmi les métaux non nobles du groupe VIII, les éléments du groupe VIII sont avantageusement choisis parmi le cobalt et le nickel, pris seuls ou en mélange. De préférence, les éléments du groupe VIB sont choisis parmi le tungstène et le molybdène, pris seuls ou en mélange. Dans le cas où la fonction hydrogénante comprend un élément du groupe VIII et un élément du groupe VIB, les associations de métaux suivants sont préférées: nickel-molybdène, cobalt-molybdène, fer-molybdène, fer-tungstène, nickel-tungstène, cobalt-tungstène, et de manière très préférée: nickel-molybdène, cobalt-molybdène, nickel-tungstène. Il est également possible d'utiliser des associations de trois métaux tel que par exemple nickel-cobalt-molybdène. Lorsqu'une combinaison de métaux du groupe VI et du groupe VIII est utilisée, le catalyseur est alors préférentiellement utilisé sous une forme sulfurée.

Selon un mode préféré, ledit catalyseur peut également comprendre de l'étain, la teneur en étain étant de préférence comprise entre 0,1 et 0,5% en poids par rapport à la masse totale de catalyseur.

Dans le cas où le catalyseur comprend au moins un métal du groupe VIB en combinaison avec au moins un métal non noble du groupe VIII, la teneur en métal du groupe VIB est avantageusement comprise entre 5 et 45% en poids d'oxyde par rapport à la masse totale dudit catalyseur, de manière préférée entre 10 et 40% en poids d'oxyde et de manière très préférée entre 20 et 35% en poids d'oxyde et la teneur en métal non noble du groupe VIII est avantageusement comprise entre 0,5 et 10% en poids d'oxyde par rapport à la masse totale dudit catalyseur, de manière préférée entre 1 et 8% en poids d'oxyde et de manière très préférée entre 1,5 et 6% en poids d'oxyde.

De manière avantageuse, le catalyseur utilisé dans le procédé selon l'invention peut contenir au moins un élément dopant choisi parmi le phosphore, le bore, le fluor ou le silicium, seul ou en mélange. De manière préférée le dopant est le phosphore.

Lorsque le catalyseur contient du phosphore, la teneur en phosphore dans ledit catalyseur est de préférence comprise entre 0,5 et 15 % poids de P₂O₅, de manière plus préférée entre 1 et 10 % poids de P₂O₅, de manière très préférée entre 2 et 8 % poids de P₂O₅.

Selon le premier mode de réalisation dans lequel ledit procédé d'hydrotraitement selon l'invention est avantageusement mis en oeuvre en amont d'une unité d'hydrocraquage de ladite charge hydrocarbonée, le catalyseur utilisé dans ledit procédé d'hydrotraitement comprend de préférence du nickel et du molybdène.
Selon le deuxième mode de réalisation dans lequel ledit procédé d'hydrotraitement selon l'invention est avantageusement mis en oeuvre en amont d'une unité de craquage catalytique en lit fluidisé, de ladite charge hydrocarbonée, le catalyseur utilisé dans ledit procédé d'hydrotraitement comprend de préférence du nickel et du molybdène, du cobalt et du molybdène, ou du nickel, du cobalt et du molybdène.

Le catalyseur utilisé dans le procédé selon l'invention comprend un support comprenant et est de préférence constituée par une alumine mésoporeuse amorphe, ladite alumine étant préparée selon l'invention.
De préférence, le support du catalyseur utilisé dans la présente invention comprend et est de préférence constitué d'une alumine mésoporeuse amorphe présentant une connectivité (Z) comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7, la connectivité étant déterminée à partir des isothermes d'adsorption/désorption d'azote.
Ladite alumine utilisée comme support dans le catalyseur et le support comprenant ladite alumine présentent une surface spécifique et une distribution poreuse calibrés et adaptée à son utilisation dans un procédé d'hydrotraitement de ladite charge hydrocarbonée.
Ladite alumine mésoporeuse amorphe constituant le support du catalyseur et le support du catalyseur utilisé dans le procédé selon l'invention présentent avantageusement la distribution poreuse suivante, mesurée par porosimétrie au mercure :
- le pourcentage de volume compris dans les pores de taille comprise entre 2 et 8 nm par rapport au volume poreux total, est compris entre 20 à 40%,
- le pourcentage de volume compris dans les pores de taille comprise entre 8 et 20 nm par rapport au volume poreux total, est compris entre 50 à 65%,
- le pourcentage de volume compris dans les pores de taille comprise entre 20 et 50 nm par rapport au volume poreux total, est inférieur à 10%,
- le pourcentage de volume compris dans les pores de taille comprise entre 50 et 7000 nm par rapport au volume poreux total, est inférieur à 10%, et de préférence inférieur à 6 %.

De préférence, l'alumine mésoporeuse est dépourvue de micropores.

De préférence, le support mésoporeux comprenant ladite alumine est dépourvu de micropores.

De préférence, l'alumine utilisée dans l'invention et ledit support comprenant ladite alumine sont non mésostructurés.

De préférence, ladite alumine et ledit support présente une surface spécifique BET comprise entre 50 et 450 m²/g, de préférence comprise entre 100 et 400 m²/g, de manière préférée comprise entre 150 et 400 m²/g et de manière très préférée comprise entre 150 et 350 m²/g.

De préférence, le volume poreux total de ladite alumine et dudit support mesuré par porosimétrie au mercure est compris entre 0,6 et 0,9 ml/g.

De préférence, ladite alumine et ledit support présentent un volume mésoporeux compris entre 0,6 et 0,8 ml/g et de manière préférée compris entre 0,65 et 0,8 ml/g.

De préférence, le support et l'alumine présentent un volume macroporeux compris entre 0 et 0,1, de préférence entre 0,01 et 0,1 ml/g et de manière préférée entre 0,01 et 0,05 ml/g.

Le diamètre médian des mésopores (Dp en nm) mesuré par porosimétrie au mercure de ladite alumine et dudit support, déterminé en volume est avantageusement compris entre 8 et 12,5 nm et de préférence entre 9,0 et 12,5 nm.

Le catalyseur utilisé dans la présente invention présente également une connectivité (Z) avantageusement supérieure à 2,7 et de préférence comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7, la connectivité du catalyseur étant déterminée à partir des isothermes d'adsorption/désorption d'azote.

Ledit catalyseur présente avantageusement une surface spécifique BET comprise entre 50 et 450 m²/g, de préférence comprise entre 50 et 300 m²/g, de manière préférée comprise entre 100 et 300 m²/g et de manière très préférée comprise entre 100 et 250 m²/g.
De préférence, ledit catalyseur présente un volume mésoporeux compris entre 0,1 et 0,6 ml/g et de manière préférée compris entre 0,2 et 0,5 ml/g.
De préférence, ledit catalyseur présente un volume macroporeux compris entre 0,01 et 0,1 ml/g.
Ledit catalyseur est également avantageusement caractérisé par la distribution poreuse suivante mesurée par porosimétrie au mercure :
- le pourcentage de volume compris dans les pores de taille inférieure à 8 nm par rapport au volume poreux total, est compris entre 20 à 40%,
- le pourcentage de volume compris dans les pores de taille comprise entre 8 et 20 nm par rapport au volume poreux total, est compris entre 40 à 65%,
- le pourcentage de volume compris dans les pores de taille comprise entre 20 et 50 nm par rapport au volume poreux total, est inférieur à 10%,
- le pourcentage de volume compris dans les pores de taille comprise entre 50 et 7000 nm par rapport au volume poreux total, est inférieur à 10%, et de préférence inférieur à 5 %.
Ladite alumine utilisée comme support du catalyseur utilisé dans le procédé selon la présente invention est préparée selon le procédé de préparation comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou les étapes de précipitation, ladite première étape de précipitation opérant à une température comprise entre 10 et 50 °C, et pendant une durée comprise entre 2 minutes et 30 minutes,
b) une étape de traitement thermique de la suspension obtenue à l'issue de l'étape a) à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'au flux d'air contenant jusqu'à 60% en volume d'eau.

De manière générale, on entend par « taux d'avancement » de la n-ième étape de précipitation le pourcentage d'alumine formé en équivalent Al₂O₃ dans ladite n-ième étape, par rapport à la quantité totale d'alumine formée à l'issue de l'ensemble des étapes de précipitation et plus généralement à l'issue des étapes de préparation du gel d'alumine.

Dans le cas où le taux d'avancement de ladite étape a) de précipitation est de 100%, ladite étape a) de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

### Etape a) de précipitation

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le ou les précurseur(s) basique(s) et acide(s) sont ajoutés dans ladite première étape de précipitation a) en solution aqueuse contenant le ou lesdits précurseurs.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

Conformément à l'invention, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10 et de manière très préférée entre 8,7 et 9,9.

Les précurseurs acide et basique sont également mélangées dans des quantités permettant d'obtenir une suspension contenant la quantité désirée d'alumine, en fonction de la concentration finale en alumine à atteindre. En particulier, ladite étape a) permet l'obtention de 40 à 100% poids d'alumine en équivalent Al₂O₃ par rapport à la quantité totale d'alumine formée à l'issue de de la ou les étapes de précipitation et plus généralement à l'issue des étapes de préparation du gel d'alumine.

Conformément à l'invention, c'est le débit du ou des précurseurs acide et basique contenant de l'aluminium qui est réglé de manière à obtenir un taux d'avancement de la première étape compris entre 40 et 100%.

De préférence, le taux d'avancement de ladite étape de précipitation a) est compris entre 40 et 99%, de préférence entre 45 et 90 % et de manière préférée entre 50 à 85%. Dans le cas où le taux d'avancement obtenu à l'issue de l'étape a) de précipitation est inférieur à 100%, une deuxième étape de précipitation est nécessaire de manière à augmenter la quantité d'alumine formée. Dans ce cas, le taux d'avancement étant défini comme étant la proportion d'alumine formée en équivalent Al₂O₃ lors de ladite étape a) de précipitation par rapport à la quantité totale d'alumine formée à l'issue des deux étapes de précipitation du procédé de préparation selon l'invention et plus généralement à l'issue des étapes de préparation du gel d'alumine.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajouté dans le milieu réactionnel et du taux d'avancement requis pour la ou les étapes de précipitation.

Les débit du ou des précurseurs acide et/ou basique contenant de l'aluminium dépendent de la dimension du réacteur utilisé et ainsi de la quantité d'eau ajoutée dans le milieu réactionnel.

De préférence, ladite étape a) de précipitation est réalisée à une température comprise entre 10 et 45°C, de manière préférée entre 15 et 45 °C, de manière plus préférée entre 20 et 45°C et de manière très préférée entre 20 et 40°C.

Il est important que ladite étape a) de précipitation opère à basse température. Dans le cas où ledit procédé de préparation selon l'invention comprend deux étapes de précipitation, l'étape a) de précipitation est avantageusement réalisée à une température inférieure à la température de la deuxième étape de précipitation.

De préférence, ladite étape a) de précipitation est réalisée pendant une durée comprise entre 5 et 20 minutes, et de manière préférée de 5 à 15 minutes.

### Etape b) de traitement thermique

Conformément à l'invention, ledit procédé de préparation comprend une étape b) de traitement thermique de la suspension obtenue à l'issue de l'étape a) de précipitation, ladite étape de traitement thermique opérant à une température comprise entre 60 et 200°C pendant une durée comprise entre 30 minutes et 5 heures, pour obtenir le gel d'alumine.

De préférence, ladite étape b) de traitement thermique est une étape de mûrissement.

De préférence, ladite étape b) de traitement thermique opère à une température comprise entre 65 et 150°C, de préférence entre 65 et 130°C, de manière préférée entre 70 et 110°C, de manière très préférée entre 70 et 95°C.

De préférence, ladite étape b) de traitement thermique est mise en oeuvre pendant une durée comprise entre 40 minutes et 5 heures, de préférence entre 40 minutes et 3 heures et de manière préférée entre 45 minutes et 2 heures.

### Deuxième étape de précipitation optionnelle

Selon un mode de réalisation préféré, dans le cas où le taux d'avancement obtenu à l'issue de l'étape a) de précipitation est inférieur à 100%, ledit procédé de préparation comprend de préférence, une deuxième étape de précipitation a') après la première étape de précipitation.

Ladite deuxième étape de précipitation permet d'augmenter la proportion d'alumine produite.

Ladite deuxième étape de précipitation a') est avantageusement mise en oeuvre entre ladite première étape de précipitation a) et l'étape b) de traitement thermique.

Dans le cas où une deuxième étape de précipitation est mise en oeuvre, une étape de chauffage de la suspension obtenue à l'issue de l'étape a) de précipitation est avantageusement mise en oeuvre entre les deux étapes de précipitation a) et a').

De préférence, ladite étape de chauffage de la suspension obtenue à l'issue de l'étape a), mise en oeuvre entre ladite étape a) et la deuxième étape de précipitation a') opère à une température comprise entre 20 et 90°C, de préférence entre 30 et 80°C, de manière préférée entre 30 et 70°C et de manière très préférée entre 40 et 65°C.

De préférence, ladite étape de chauffage est mise en oeuvre pendant une durée comprise entre 7 et 45 minutes et de préférence entre 7 et 35 minutes.

Ladite étape de chauffage est avantageusement mise en oeuvre selon toutes les méthodes de chauffage connues de l'homme du métier.

Selon ledit mode de réalisation préféré, ledit procédé de préparation comprend une deuxième étape de précipitation de la suspension obtenue à l'issue de l'étape de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, le taux d'avancement étant défini comme étant la proportion d'alumine formée en équivalent Al₂O₃ lors de ladite deuxième étape de précipitation par rapport à la quantité totale d'alumine formée à l'issue des deux étapes de précipitation, plus généralement à l'issue des étapes de préparation du gel d'alumine et de préférence à l'issue de l'étape a') du procédé de préparation selon l'invention, ladite étape opérant à une température comprise entre 40 et 90 °C, et pendant une durée comprise entre 2 minutes et 50 minutes.

De même que dans la première étape de précipitation a), l'ajout dans la suspension chauffée, d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, ladite deuxième étape de précipitation opère sous agitation.

De préférence, ladite deuxième étape est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

De même que dans l'étape a) de précipitation, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10 et de manière préférée entre 8,7 et 9,9.

Les précurseurs acide et basique sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 0 à 60% poids d'alumine en équivalent Al₂O₃ par rapport à la quantité totale d'alumine formée à l'issue des deux étapes de précipitation.

De même que dans l'étape a) de précipitation, c'est le débit du ou des précurseurs acide et basique contenant de l'aluminium qui est réglé de manière à obtenir un taux d'avancement de la deuxième étape compris entre 0 et 60%.

De préférence, le taux d'avancement de ladite étape de précipitation a) est compris entre 10 et 55 % et de préférence entre 15 à 55%.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débit du ou des précurseurs acide et/ou basique contenant de l'aluminium dépendant de la dimension du réacteur utilisé et ainsi de la quantité d'eau ajoutée dans le milieu réactionnel.

A titre d'exemple, si on travaille dans un réacteur de 3 l et que l'on vise 1l de suspension d'alumine de concentration finale en Al₂O₃ de 50 g/l, le taux d'avancement ciblé est de 50% en équivalent Al₂O₃ pour la première étape de précipitation. Ainsi, 50% de l'alumine totale doit être apportée lors de l'étape a) de précipitation. Les précurseurs d'alumines sont l'aluminate de sodium à une concentration de 155 g/l en Al₂O₃ et le sulfate d'aluminium à une concentration de 102 g/l en Al₂O₃ Le pH de précipitation de la première étape est fixée à 9,5 et la deuxième à 9. La quantité d'eau ajoutée dans le réacteur est de 622 ml.

Pour la première étape a) de précipitation opérant à 30°C et pendant 8 minutes, le débit de sulfate d'aluminium doit être de 10,5 ml/min et le débit d'aluminate de sodium est de 13,2 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 2,9 ml/min et le débit d'aluminate de sodium est de 3,5 ml/min. Le ratio massique d'aluminate de sodium sur sulfate d'aluminium est donc de 1,84.

De préférence, la deuxième étape de précipitation est réalisée à une température compris entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

Dans le cas où ladite deuxième étape de précipitation est mise en oeuvre, ledit procédé de préparation comprend également avantageusement une deuxième étape de chauffage de la suspension obtenue à l'issue de ladite deuxième étape de précipitation à une température comprise entre 50 et 95°C et de préférence entre 60 et 90°C.

De préférence, ladite deuxième étape de chauffage est mise en oeuvre pendant une durée comprise entre 7 et 45 minutes.

Ladite deuxième étape de chauffage est avantageusement mise en oeuvre selon toutes les méthodes de chauffage connues de l'homme du métier.

Ladite deuxième étape de chauffage permet d'augmenter la température du milieu réactionnel avant de soumettre la suspension obtenue à l'étape b) de traitement thermique.

### Etape c) de filtration

Conformément à l'invention, le procédé de préparation d'alumine selon l'invention comprend également une étape c) de filtration de la suspension obtenue à l'issue de l'étape b) de traitement thermique, suivie d'au moins une étape de lavage du gel obtenu. Ladite étape de filtration est réalisée selon les méthodes connues de l'homme du métier.

La filtrabilité de la suspension obtenue à l'issue de l'étape a) de précipitation ou des deux étapes de précipitation est améliorée par la présence de ladite étape b) de traitement thermique finale de la suspension obtenue, ladite étape de traitement thermique favorisant la productivité du procédé de préparation ainsi qu'une extrapolation du procédé au niveau industriel.

Ladite étape de filtration est avantageusement suivie d'au moins une étape de lavage à l'eau et de préférence d'une à trois étapes de lavage, avec une quantité d'eau égale à la quantité de précipité filtré.

L'enchainement des étapes a) b) et c) et éventuellement de la deuxième étape de précipitation, de la deuxième étape de chauffage et de l'étape de filtration optionnelle, permet l'obtention d'un gel d'alumine spécifique présentant un indice de dispersibilité supérieur à 70%, une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine.

Le gel d'alumine ainsi obtenu, aussi appelé boehmite, présente un indice de dispersibilité compris entre 70 et 100%, de manière préférée entre 80 et 100%, de manière très préférée entre 85 et 100% et de manière encore plus préférée entre 90 et 100%.

De préférence, le gel d'alumine ainsi obtenu présente une taille de cristallites comprise entre 2 à 35 nm.

De préférence, le gel d'alumine ainsi obtenu comprend une teneur en soufre comprise entre 0,001 % et 1% poids, e manière préférée entre 0,001 et 0,40% poids, de manière très préférée entre 0,003 et 0,33 % poids, et de manière plus préférée entre 0,005 et 0,25 % poids.

De préférence, le gel d'alumine ainsi obtenu comprend une teneur en sodium comprise entre 0,001 % et 1% poids, de manière préférée entre 0,001 et 0,15 % poids, de manière très préférée entre 0,0015 et 0,10% poids, et 0,002 et 0,040 % poids.

En particulier, le gel d'alumine ou la boehmite sous forme de poudre selon l'invention est composée de cristallites dont la taille, obtenue par la formule de Scherrer en diffraction des rayons X selon les directions cristallographiques (020) et (120) sont respectivement comprise entre 2 et 20 nm et entre 2 et 35 nm.

De préférence, le gel d'alumine selon l'invention présente une taille de cristallites selon la direction cristallographique (020) comprise entre 1 à 15 nm et une taille de cristallite selon la direction cristallographique (120) comprise entre 1 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le gel d'alumine ainsi préparé et présentant un taux de dispersibilité élevé permet de faciliter l'étape de mise en forme dudit gel selon toutes les méthodes connues de l'homme du métier et en particulier par malaxage extrusion, par granulation et par la technique dite de l'oil drop selon la terminologie anglo-saxonne.

### Etape d) de séchage

Conformément à l'invention, le gel d'alumine obtenu à l'issue de l'étape c) de filtration, est séché dans une étape d) de séchage pour obtenir une poudre.

Ladite étape de séchage est avantageusement mise en oeuvre à une température comprise entre 20 et 50°C et pendant une durée comprise entre 1 jour et 3 semaines ou par atomisation.

Dans le cas où ladite étape d) de séchage est mise en oeuvre à une température comprise entre 20 et 50°C et pendant une durée comprise entre 1 jour et 3 semaines, ladite étape d) de séchage peut avantageusement être réalisée en étuve fermée et ventilée, de préférence ladite étape de séchage opère à une température comprise entre 25 et 40°C, et pendant une durée comprise entre 3 jours et deux semaines.

Dans le cas où ladite étape d) de séchage est mise en oeuvre par atomisation, le gâteau obtenu à l'issue de l'étape de traitement thermique éventuellement suivie d'un étape de filtration est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre. De préférence, dans le cas où ladite étape d) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Etape e) de mise en forme

Conformément à l'invention, la poudre obtenue à l'issue de l'étape d) de séchage est mise en forme dans une étape e) pour obtenir un matériau cru.

On entend par matériau cru, le matériau mis en forme et n'ayant pas subi d'étapes de traitement thermique.

De préférence, ladite étape e) de mise en forme est réalisée par malaxage extrusion, par pastillage, par la méthode de la coagulation en goutte (oil-drop), par granulation au plateau tournant ou par toute autre méthode bien connue de l'homme du métier.

De manière très préférée, ladite étape e) de mise en forme est réalisée par malaxage extrusion.

### Etape f) de traitement thermique

Conformément à l'invention, la matériau cru obtenu à l'issue de l'étape e) de mise en forme subit ensuite une étape f) de traitement thermique à une température comprise entre 500 et 1000°C, pendant une durée comprise entre 2 et 10 h, en présence ou non d'au flux d'air contenant jusqu'à 60% volume d'eau.

De préférence, ladite étape f) de traitement thermique opère à une température comprise entre 540°C et 850°C.

De préférence, ladite étape f) de traitement thermique opère pendant une durée comprise entre 2h et 10h.

Ladite étape f) de traitement thermique permet la transition de la boehmite vers l'alumine finale.

Le procédé de préparation de l'alumine utilisé comme support du catalyseur mis en oeuvre dans le procédé selon l'invention permet l'obtention d'une alumine mésoporeuse amorphe présentant une connectivité supérieure à 2,7 et une mésoporosité contrôlée, ladite alumine présentant une bonne stabilité thermique et chimique, ayant une distribution en taille des mésopores centrée, uniforme et contrôlée, et une surface spécifique et un volume poreux et en particulier mésoporeux calibrés.

Le catalyseur utilisé dans le procédé d'hydrotraitement selon l'invention est ensuite avantageusement obtenu par ajout des éléments constituant la phase active.

Les éléments du groupes VIB et/ou du groupe VIII et éventuellement au moins un élément dopant choisi parmi le bore, le silicium, le fluor et le phosphore et éventuellement les éléments des groupes IVB, ou IB dans le cas où la phase active contient du nickel réduit, et éventuellement au moins un additif organique peuvent être éventuellement introduits, tout ou partie, à toute étape de la préparation, au cours de la synthèse du support, de préférence lors de la mise en forme du support, ou de manière très préférée après la mise en forme du support par toute méthode connue de l'homme du métier. Ils peuvent être introduits après la mise en forme du support et ce après ou avant le séchage et la calcination du support et de préférence après l'étape de calcination du support mis en forme.

Selon un mode préféré de la présente invention, tout ou partie des éléments du groupe VIB et/ou du groupe VIII, et éventuellement au moins un élément dopant choisi parmi le bore, le silicium et le phosphore et éventuellement les éléments des groupes IVB, ou IB dans le cas ou la phase active contient du nickel réduit, et éventuellement au moins un additif organique, peuvent être introduits au cours de la mise en forme du support, par exemple, lors de l'étape de malaxage extrusion de la poudre séchée obtenue.

Selon un autre mode préféré de la présente invention, tout ou partie des éléments du groupe VIB et/ou du groupe VIII et éventuellement au moins un élément dopant choisi parmi le bore, le silicium et le phosphore et éventuellement les éléments des groupes IVB, ou IB dans le cas ou la phase active contient du nickel réduit, et éventuellement au moins un additif organique, peuvent être introduits par une ou plusieurs opérations d'imprégnation du support mis en forme et calciné, par une solution contenant les précurseurs desdits éléments. D'une façon préférée, le support est imprégné par une solution aqueuse. L'imprégnation du support est de préférence effectuée par la méthode d'imprégnation dite "à sec" bien connue de l'homme du métier dans lequel on introduit juste la quantité d'éléments désirés sous forme de sels solubles dans le solvant choisi, par exemple de l'eau déminéralisée, de façon à remplir aussi exactement que possible la porosité du support.

Dans le cas ou le catalyseur utilisé dans le procédé d'hydrotraitement selon la présente invention contient un métal non noble du groupe VIII, les métaux du groupe VIII sont de préférence introduits par une ou plusieurs opérations d'imprégnation du support mis en forme et calciné, après ceux du groupe VIB ou en même temps que ces derniers.

Selon un autre mode préféré de la présente invention, le dépôt des éléments du groupe IVB ou du groupe IB peut aussi être réalisé de manière simultanée en utilisant par exemple une solution contenant un sel de d'étain ou un sel de cuivre.

Selon un autre mode préféré de la présente invention, le dépôt de bore et de silicium peut aussi être réalisé de manière simultanée en utilisant par exemple une solution contenant un sel de bore et un composé du silicium de type silicone.

Lorsqu'au moins un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse EDX (analyse dispersive en énergie) des composants du catalyseur, ou bien encore par l'établissement d'une cartographie de répartition des éléments présents dans le catalyseur par microsonde électronique.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple, les chlorures, les bromures et les fluorures, les carboxylates comme par exemple les acétates et les carbonates.

Le ou les élément(s) promoteur(s) choisi(s) dans le groupe formé par le silicium, le bore et le phosphore peuvent avantageusement être introduits par une ou plusieurs opérations d'imprégnation avec excès de solution sur le précurseur calciné.

La source de bore peut avantageusement être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent avantageusement être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent également être avantageusement employés. Le silicium peut avantageusement être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe IB qui peuvent être utilisées sont bien connues de l'homme du métier. Par exemple, parmi les sources de cuivre, on peut utiliser le nitrate de cuivre Cu(NO₃)₂.

Les sources d'éléments du groupe IVB qui peuvent être utilisées sont bien connues de l'homme du métier. Par exemple, parmi les sources d'étain, on peut utiliser le chlorure d'étain SnCl₂.

Le catalyseur utilisé dans le procédé d'hydrotraitement selon l'invention peut avantageusement être additivé. Dans ce cas, au moins un additif organique est ajouté comme défini précédemment et de préférence introduit dans la solution d'imprégnation contenant les précurseurs de la phase active ou dans une étape ultérieure d'imprégnation.

L'invention est illustrée par les exemples suivants qui ne présentent, en aucun cas, un caractère limitatif.

### Exemples:

### Exemple 1 : (comparatif) Préparation d'un support AL-1 (non-conforme) selon le brevet US 7 790 562.

On réalise dans un premier temps la synthèse d'un gel d'alumine non-conforme en ce que l'exemple 2 est réalisé selon le procédé de préparation décrit dans le brevet US7790562. En particulier, le procédé de préparation du gel d'alumine selon l'exemple 2 ne comprend pas d'étape de traitement thermique de la suspension obtenue à l'issue des étapes de précipitation et en ce que la première étape de précipitation a) ne produit pas une quantité d'alumine supérieure à 40% en équivalent Al₂O₃ par rapport à la quantité totale d'alumine formée à l'issue de la deuxième étape de précipitation.

La synthèse est réalisée dans un réacteur de 7L et une suspension finale de 5L en 2 étapes de précipitation. La quantité d'eau ajoutée dans le réacteur est de 3868 ml.

La concentration finale en alumine visée est de 30g/L.

Une première étape de co-précipitation de sulfate d'aluminium Al₂(SO₄) et d'aluminate de sodium NaAlOO est réalisée à 30°C et pH=9,3 pendant une durée de 8 minutes. Les concentrations des précurseurs d'aluminium utilisées sont les suivantes : Al₂(SO₄)= à 102g/L en Al₂O₃ et NaAlOO à 155g/L en Al₂O₃. L'agitation est de 350 rpm tout au long de la synthèse.

Une solution de sulfate d'aluminium Al₂(SO₄) est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.

Une suspension contenant un précipité d'alumine est obtenue.

La concentration finale en alumine visée étant de 30g/L, le débit des précurseurs sulfate d'aluminium Al₂(SO₄) et aluminate de sodium NaAlOO contenant de l'aluminium introduit dans la première étape de précipitations sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisée par ajout de sulfate d'aluminium Al₂(SO₄) à une concentration de 102 g/L en Al₂O₃ et d'aluminate de sodium NaAlOO à une concentration de 155 g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.

Une suspension contenant un précipité d'alumine est obtenue.

La concentration finale en alumine visée étant de 30g/L, le débit des précurseurs sulfate d'aluminium Al₂(SO₄) et aluminate de sodium NaAlOO contenant de l'aluminium introduit dans la deuxième étape de précipitations sont respectivement de 12,8 ml/min et 14,1 ml/min.

Ces débits de précurseurs acide et basique contenant de l'aluminium permettent d'obtenir à l'issue de la deuxième étape de précipitation un taux d'avancement de 70%.

La suspension ainsi obtenue ne subit pas d'étape de traitement thermiquee ou mûrissement.

La suspension obtenue est ensuite filtrée par déplacement d'eau sur un outil type Buchner fritté et le gel d'alumine obtenu est lavé 3 fois avec 5 L d'eau distillée à 70°C. Le temps de filtration ainsi que les lavages est de 4 h.

Les caractéristiques du gel d'alumine ainsi obtenu sont résumés dans le tableau 1.

**Tableau 1 : Caractéristiques du gel d'alumine obtenu selon l'exemple 1.**

| | Gel d'alumine selon l'exemple 1 |
|---|---|
| Indice de dispersibilité Ta=10% (%) | 60 |
| Taille (020) (nm) | 2,9 |
| Taille (120) (nm) | 4,1 |
| Sodium Na (ppm) | 0,011 |
| Soufre S (ppm) | 0,057 |
| Temps de filtration | 4 h |

Le gel d'alumine est ensuite séché par atomisation avec une température d'entrée de 250°C et de sortie de 130°C.

Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes, pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées. Les extrudés obtenus sont séchés à 100°C pendant une nuit puis calciné pendant 2 h à 600°C.

Les caractéristiques de l'alumine formée sont reportées dans le tableau 2 :

**Tableau 2 : caractéristiques de l'alumine AL-1 obtenu selon l'exemple 1.**

| | AL-1 |
|---|---|
| S_{BET}(m²/g) | 230 |
| V_{Des° N2} (ml/g) | 0,91 |
| VPT (Hg) (ml/g) | 0,78 |
| Vmacro (Hg) (ml/g) | 0,01 |
| Vméso (Hg) (ml/g) | 0,81 |
| V (d<6nm) % | 43 |
| V (6<d<15nm) % | 55 |
| V (15<d<50nm) % | 1 |
| Z | 2,5 |
| Dp (Hg) (nm) | 11,9 |

### Exemple 2 (selon l'invention) : Préparation des supports AL-2 et AL-3 (conformes).

On réalise dans un premier temps la synthèse de deux supports alumines AL-2 et AL-3 selon un procédé de préparation conforme à l'invention dans un réacteur de 7L et une suspension finale de 5L en 3 étapes, deux étapes de précipitation suivie d'une étape de mûrissement.

La concentration finale en alumine visée est de 45g/L. La quantité d'eau ajoutée dans le réacteur est de 3267 ml. L'agitation est de 350 rpm tout au long de la synthèse.

Une première étape de co-précipitation dans de l'eau, de sulfate d'aluminium Al₂(SO₄) et d'aluminate de sodium NaAlOO est réalisée à 30°C et pH=9,5 pendant une durée de 8 minutes. Les concentrations des précurseurs d'aluminium utilisées sont les suivantes : Al₂(SO₄)= à 102g/L en Al₂O₃ et NaAlOO à 155g/L en Al₂O₃.

Une solution de sulfate d'aluminium Al₂(SO₄) est ajoutée en continu pendant 8 minutes à un débit de 69,6 ml/min à une solution d'aluminate de sodium NaAlOO à un débit de 84,5 ml/min selon un ratio massique base/acide = 1,84 de manière à ajuster le pH à une valeur de 9,5. La température du milieu réactionnel est maintenu à 30°C.

Une suspension contenant un précipité d'alumine est obtenue.

La concentration finale en alumine visée étant de 45g/L, le débit des précurseurs sulfate d'aluminium Al₂(SO₄) et aluminate de sodium NaAlOO contenant de l'aluminium introduit dans la première étape de précipitations sont respectivement de 69,6 ml/min et 84,5 ml/min.

Ces débits de précurseurs acide et basique contenant de l'aluminium permettent d'obtenir à l'issue de la première étape de précipitation un taux d'avancement de 72%.

La suspension obtenue est ensuite soumise à une montée en température de 30 à 68°C.

Une deuxième étape de co-précipitation de la suspension obtenue est ensuite réalisée par ajout de sulfate d'aluminium Al₂(SO₄) à une concentration de 102g/L en Al₂O₃ et d'aluminate de sodium NaAlOO à une concentration de 155g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 7,2 ml/min à une solution d'aluminate de sodium NaAlOO selon un ratio massique base/acide = 1,86 de manière à ajuster le pH à une valeur de 9. La température du milieu réactionnel dans la deuxième étape est maintenu à 68°C.

Une suspension contenant un précipité d'alumine est obtenue.

La concentration finale en alumine visée étant de 45g/L, le débit des précurseurs sulfate d'aluminium Al₂(SO₄) et aluminate de sodium NaAlOO contenant de l'aluminium introduit dans la deuxième étape de précipitations sont respectivement de 7,2 ml/min et de 8,8 ml/min.

Ces débits de précurseurs acide et basique contenant de l'aluminium permettent d'obtenir à l'issue de la deuxième étape de précipitation un taux d'avancement de 28%.

La suspension obtenue est ensuite soumise à une montée en température de 68 à 90°C.

La suspension subit ensuite une étape de traitement thermique dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 5 L d'eau distillée. Le temps de filtration ainsi que les lavages est de 3h.

Les caractéristiques du gel d'alumine ainsi obtenu sont résumés dans le tableau 3.

**Tableau 3 : Caractéristiques du gel d'alumine obtenu selon l'exemple 2.**

| | Gel d'alumine selon l'exemple 2 |
|---|---|
| Indice de dispersibilité Ta=10% (%) | 100 |
| Taille (020) (nm) | 2,8 |
| Taille (120) (nm) | 3,5 |
| Sodium Na (%) | 0,074 |
| Soufre S (%) | 0,0364 |
| Temps de filtration | 3h |

Un gel présentant un indice de dispersibilité de 100% est ainsi obtenu.

Le gel d'alumine obtenu est ensuite séché par atomisation avec une température d'entrée de 250°C et de sortie de 130°C. Le gel séché par atomisation est appelé Gel n°1.

Le gel d'alumine obtenu selon l'exemple 3 a également été séché dans une étude ventilée à 35°C pendant 4 jours. Le gel séché en étuve est appelé Gel n°2.

Les gels d'alumine séchés n°1 et 2 sont ensuite respectivement introduits dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes, pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées. Les extrudés obtenus sont séchés à 100°C pendant une nuit puis calciné pendant 2 h à 600°C.

Les caractéristiques des alumines AL-2 et AL-3 formées sont reportées dans le tableau 4 :

**Tableau 4 : Caractéristiques des alumines AL-2 et AL-3 obtenus selon l'exemple 2.**

| | AL-2 | AL-3 |
|---|---|---|
| Type de séchage | Atomisation | 35°C |
| S_{BET}(m²/g) | 289 | 292 |
| VPT (Hg) (ml/g) | 0,68 | 0,69 |
| Vmacro (50-7000nm) (Hg) (ml/g) | 2% | 3% |
| Vméso (Hg) (ml/g) | 0,71 | 0,73 |
| V (2<d<8nm) % | 26 | 21 |
| V (8<d<20nm) % | 61 | 64 |
| V (20<d<50nm) % | 3 | 4 |
| V (50<d<7000nm) % | 2 | 3 |
| Z | 6,5 | 6 |
| Dp (nm) (Hg) | 9,7 | 9,8 |

### Exemple 3 : Préparation des catalyseurs C1 (non conforme), C2 (conforme) et C3 (conforme) à partir respectivement des supports alumines AL-1, AL-2, et AL-3.

A partir des supports d'alumine AL-1, AL-2, AL-3, et qui se présentent sous la forme d'extrudés, on prépare respectivement les catalyseurs C1, C2, C3 en ajoutant du nickel, du molybdène et du phosphore. La solution d'imprégnation est préparée par dissolution à chaud de l'oxyde de molybdène (21,5g) et d'hydroxyde de nickel (5,4g) dans le solution d'acide phosphorique (8,2g) en solution aqueuse. Après imprégnation à sec des supports AL-1, AL-2, AL-3 les extrudés sont laissés à maturer en atmosphère saturée en eau pendant 12h, puis ils sont séchés une nuit à 90°C. La calcination du précurseur catalytique à 450°C pendant 2h conduit respectivement aux catalyseurs calcinés C1, C2, et C3. La composition finale des catalyseurs C1, C2, et C3 exprimée sous forme d'oxydes est alors la suivante : MoO₃ = 21,5 +/- 0,2 (% en poids), NiO = 4,3 +/- 0,1 (% en poids) et P₂O₅ = 5,0 +/-0,1 (%en poids). La répartition poreuse des catalyseurs figure dans le tableau 5.

**Tableau 5 : Répartition poreuse des catalyseurs C1, C2 et C3**

| | C1 | C2 | C3 |
|---|---|---|---|
| Répartition poreuse | (%VPT) | (%VPT) | (%VPT) |
| d < 8 nm | 44 | 29 | 24 |
| 8 < d < 21 nm | 54 | 58 | 61 |
| 21 < d < 50 nm | 1 | 3 | 4 |
| 50 < d < 7000 nm | 1 | 2 | 3 |
| | | | |
| Vméso (mL/g) | 0,38 | 0,39 | 0,40 |
| Vmacro (mL/g) | 0,01 | 0,02 | 0,02 |
| Dp à Vméso/2 (nm) (Hg) | 11,3 | 9,6 | 9,7 |
| Z | 2,5 | 6,5 | 6,0 |

### Exemple 4 : Préparation des catalyseurs C1' (non conforme), C2' (conforme) et C3' (conforme) à partir respectivement des supports alumines AL-1, AL-2, et AL-3.

A partir des supports d'alumine AL-1, AL-2, et AL-3, et qui se présentent sous la forme d'extrudés, on prépare respectivement les catalyseurs C1', C2', et C3' en ajoutant du nickel, du cobalt, du molybdène et du phosphore. La solution d'imprégnation est préparée par dissolution à chaud de l'oxyde de molybdène (18,0g), de carbonate de cobalt (4,95g) et d'hydroxyde de nickel (1,3g) dans le solution d'acide phosphorique (8,1g) en solution aqueuse. Après imprégnation à sec des supports AL-1, AL-2, et AL-3 les extrudés sont laissés à maturer en atmosphère saturée en eau pendant 12h, puis ils sont séchés une nuit à 90°C. La calcination du précurseur catalytique à 450°C pendant 2h conduit respectivement aux catalyseurs calcinés C1', C2', et C3". La composition finale des catalyseurs C1', C2', et C3' exprimée sous forme d'oxydes est alors la suivante : MoO₃ = 18,0 +/- 0,2 (% en poids), NiO = 1,0 +/- 0,1 (% en poids), CoO = 3,1 +/- 0,1 (% en poids) et P₂O₅ = 4,9 +/-0,1 (%en poids). La répartition poreuse des catalyseurs figure dans le tableau 6.

**Tableau 6 : Répartition poreuse des catalyseurs C1' C2' et C3'**

| | C1' | C2' | C3' |
|---|---|---|---|
| Répartition poreuse | (%VPT) | (%VPT) | (%VPT) |
| d < 8 nm | 44 | 28 | 23 |
| 8 < d < 21 nm | 54 | 59 | 62 |
| 21 < d < 50 nm | 1 | 3 | 4 |
| 50 < d < 7000 nm | 1 | 2 | 3 |
| | | | |
| Vméso (mL/g) | 0,46 | 0,43 | 0,42 |
| Vmacro (mL/g) | 0,01 | 0,02 | 0,02 |
| Dp (nm) (Hg) | 11,3 | 9,6 | 9,7 |
| Z | 2,5 | 6,5 | 6,0 |

### Exemple 5 : Évaluation des performances catalytiques des catalyseurs C1, C2, et C3 en tests sur charges réelles dans le cas d'un procédé d'hydrotraitement d'une charge distillat sous vide (DSV) placé en amont d'une unité d'hydrocraquage

Les catalyseurs C1 (non conforme), C2 (conforme), et C3 (conforme) précédemment décrits ont été comparés en hydrotraitement d'une coupe distillat sous vide.

Les catalyseurs C1, C2, et C3 sont préalablement sulfurés, à l'aide d'une charge gazole de type straight run (densité 0,863 g/cm³, 1200 ppm de soufre organique, 140 ppm d'azote), additivé de 4% de DMDS évolution®. Le débit de ladite charge en entrée de réacteur est de 18 cm³/h (à 15°C), le débit d'hydrogène en entrée de réacteur est de 19,8 NL/h, et la pression est de 140 bars (14 MPa) en sortie. Le réacteur est également soumis à une montée en température sous débit liquide et gaz de la température ambiante à 350°C à une vitesse de 12°C/h (palier de 6h à 350°C).

### Conditions de test

La charge utilisée est un distillat sous vide et a une TMP de 474°C C (T5%= 389°C, T50%= 468°C, T70%= 498°C), de densité 0,9355 g/mL à 15°C, contenant 2,23% de soufre, 1750 ppm d'azote dont 500 ppm d'azote basique, et d'indice de réfraction 1,5004. Les températures d'ébullition de 5% de la charge est de 370°C et de 550°C pour 95% de la charge. Le test des catalyseurs s'effectue à des températures de réaction de 370°C, 380°C et 390°C après sulfuration des catalyseurs. Le débit de charge en entrée de réacteur est de 18 cm³/h (à 15°C), le débit d'hydrogène en entrée de réacteur est de 19,8 NL/h et la pression est de 140 bars (14 MPa) en sortie. Le test est réalisé dans un réacteur pilote de 9 ml de catalyseur. Après stabilisation du réacteur pendant environ 150 h à 370°C, les mesures d'activités se font à 380°C et 390°C en régime stabilisé (pendant 100h). Les effluents sont analysés en terme de teneurs en azote organique, en densité, indice de réfraction et par distillation simulée. Les valeurs de carbone aromatique sont obtenues avec la méthode ASTM 3238-95 dite n-d-M.

**Tableau 7 : Résultats des tests catalytiques**

| | Azote organique (ppm) | | | Carbone aromatique (%) | | |
|---|---|---|---|---|---|---|
| | 370°C | 380°C | 390°C | 370°C | 380°C | 390°C |
| C1 non conforme | 304 | 145 | 50 | 10,2 | 9,3 | 8,3 |
| C2 conforme | 220 | 87 | 22 | 10,0 | 8,9 | 7,8 |
| C3 conforme | 232 | 91 | 27 | 10,1 | 9,0 | 7,9 |

Le tableau 7 montre que de manière surprenante, les catalyseurs C2 et C3 conformes à l'invention sont plus actifs que le catalyseur C1 (non conforme). Le tableau montre qu'avec l'utilisation du catalyseur C2 ou du catalyseur C3, à même température de test la quantité d'azote organique dans les effluents est plus faible que lors de l'utilisation du catalyseur C1, et donc que les catalyseurs C2 et C3 sont plus actifs en hydrodéazotation de distillat sous vide que le catalyseur C1. Le tableau montre également qu'à même température de test les effluents issus du test du catalyseur C2 ou du catalyseur C3 contiennent une plus faible proportion de carbone aromatique que lors de l'utilisation du catalyseur C1, et donc que les catalyseurs C2 et C3 sont plus actifs en hydrogénation de distillat sous vide que le catalyseur C1.

### Exemple 6 : Évaluation des performances catalytiques des catalyseurs C1', C2', et C3' en tests sur charges réelles dans le cas d'un procédé d'hydrotraitement d'une charge distillat sous vide (DSV) placé en amont d'une unité de craquage catalytique en lit fluidisé.

Les catalyseurs C1' (non-conforme), C2' (conforme), et C3' (conforme) précédemment décrits ont été comparés en hydrotraitement d'une coupe distillat sous vide.

Les catalyseurs C1, C2 et C3 sont préalablement sulfurés, à l'aide d'une charge gazole de type straight run (densité 0,863 g/cm³, 1200 ppm de soufre organique, 140 ppm d'azote), additivé de 4% de DMDS évolution®. Le débit de charge en entrée de réacteur est de 9 cm³/h (à 15°C), le débit d'hydrogène en entrée de réacteur est de 2,25 NL/h, et la pression est de 65 bars (6,5 MPa) en sortie. Le réacteur est également soumis à une montée en température sous débit liquide et gaz de la température ambiante à 350°C à une vitesse de 12°C/h (palier de 6h à 350°C).

### Conditions de test

La charge utilisée est un distillat sous vide et a une TMP de 474°C C (T5%= 389°C, T50%= 468°C, T70%= 498°C), de densité 0,9355 g/mL à 15°C, contenant 2,23% de soufre, 1750 ppm d'azote dont 500 ppm d'azote basique, et d'indice de réfraction 1,5004. Les températures d'ébullition de 5% de la charge est de 370°C et de 550°C pour 95% de la charge. Le test des catalyseurs s'effectue à des températures de réaction de 360°C, 375°C et 390°C après sulfuration des catalyseurs. Débit de charge en entrée de réacteur de 9 cm³/h (à 15°C), débit d'hydrogène en entrée de réacteur de 2,25 NL/h, pression de 65 bars (6,5 MPa) en sortie. Le test est réalisé dans un réacteur pilote de 9 ml de catalyseur. Après stabilisation du réacteur pendant environ 150 h à 360°C, les mesures d'activités se font à 375°C et 390°C en régime stabilisé (pendant 100h). Les effluents sont analysés en terme de teneurs en soufre et en azote organique résiduels dans les effluents.

**Tableau 8 : Résultats des tests catalytiques**

| | Soufre organique (ppm) | | | Azote organique (ppm) | | |
|---|---|---|---|---|---|---|
| | 360°C | 375°C | 390°C | 360°C | 375°C | 390°C |
| C1' non conforme | 990 | 374 | 120 | 809 | 575 | 360 |
| C2' conforme | 820 | 294 | 91 | 743 | 515 | 302 |
| C3' conforme | 825 | 305 | 98 | 758 | 528 | 310 |

Le tableau 8 montre que de manière surprenante, le catalyseur C2' (conforme à l'invention) et le catalyseur C3' (conforme à l'invention) sont plus actifs que le catalyseur C1' (non conforme). Le tableau montre qu'à même température de test la quantité de soufre organique dans les effluents du test des catalyseurs C2' et C3' est plus faible que lors de l'utilisation du catalyseur C1', et donc que les catalyseurs C2' et C3' sont plus actifs en hydrodésulfuration de distillat sous vide que le catalyseur C1'. Le tableau montre également qu'à même température de test, les effluents issus du test du catalyseur C2' ou du test du catalyseur C3' contiennent une plus faible proportion d'azote organique que lors de l'utilisation du catalyseur C1', et donc que les catalyseurs C2' et C3' sont plus actifs en hydrodéazotation de distillat sous vide que le catalyseur C1'.

## Revendications

1. Procédé d'hydrotraitement d'au moins une charge hydrocarbonée présentant une température moyenne pondérée (TMP) supérieure à 380°C, opérant à une température comprise entre 250°C et 430°C, à une pression totale comprise entre 4 MPa et 20 MPa avec un ratio volume d'hydrogène par volume de charge hydrocarbonée compris entre 200 et 2000 litres par litre et à une Vitesse Volumique Horaire (WH) définie par le rapport du débit volumique de charge hydrocarbonée liquide par le volume de catalyseur chargé dans le réacteur comprise entre 0,5 et 5 h⁻¹, ledit procédé utilisant au moins un catalyseur comprenant au moins un métal du groupe VIB et/ou au moins un métal du groupe VIII de la classification périodique et un support comprenant une alumine mésoporeuse amorphe, ledit procédé comprenant au moins les étapes suivantes de préparation de ladite alumine:
a) au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 40 et 100%, le taux d'avancement étant défini comme étant la proportion d'alumine formée en équivalent Al₂O₃ lors de ladite étape a) de précipitation par rapport à la quantité totale d'alumine formée à l'issue de la ou les étapes de précipitation, ladite étape a) opérant à une température comprise entre 10 et 50 °C, et pendant une durée comprise entre 2 minutes et 30 minutes,
b) une étape de traitement thermique de la suspension obtenue à l'issue de l'étape a) à une température comprise entre 50 et 200°C pendant une durée comprise entre 30 minutes et 5 heures,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'un flux d'air contenant jusqu'à 60% en volume d'eau .

2. Procédé selon la revendication 1 dans lequel ladite charge hydrocarbonée est choisie parmi les distillats sous vide, les effluents issus d'une unité de craquage catalytique FCC, les gazoles légers issus d'une unité de craquage catalytique, les huiles de coupe lourde, les effluents paraffiniques issus de la synthèse Fischer-Tropsch, les effluents issus de la distillation sous vide, les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, pris seuls ou en mélange.

3. Procédé selon l'une des revendications 1 ou 2 dans lequel les éléments du groupe VIII sont choisis parmi le cobalt et le nickel, pris seuls ou en mélange.

4. Procédé selon l'une des revendications 1 à 3 dans lequel les éléments du groupe VIB sont choisis parmi le tungstène et le molybdène, pris seuls ou en mélange.

5. Procédé selon l'une des revendications 1 à 4 dans lequel le support du catalyseur comprend une alumine mésoporeuse amorphe présentant une connectivité (Z) comprise entre 3 et 7.

6. Procédé selon l'une des revendications 1 à 5 dans lequel ledit procédé d'hydrotraitement selon l'invention est mis en oeuvre en amont d'une unité d'hydrocraquage de ladite charge hydrocarbonée.

7. Procédé selon la revendication 6 dans lequel ledit procédé d'hydrotraitement opère à une température comprise entre 350 et 430°C, à une pression totale comprise entre 8 MPa et 20 MPa avec un ratio volume d'hydrogène par volume de charge hydrocarbonée compris entre 200 et 2000 litres par litre et à une Vitesse Volumique Horaire (WH) définie par le rapport du débit volumique de charge hydrocarbonée liquide par le volume de catalyseur chargé dans le réacteur comprise entre 0,5 et 5 h⁻¹.

8. Procédé selon l'une des revendications 1 à 5 dans lequel ledit procédé d'hydrotraitement selon l'invention est mis en oeuvre en amont d'une unité de craquage catalytique en lit fluidisé de ladite charge hydrocarbonée.

9. Procédé selon la revendication 8 dans lequel ledit procédé d'hydrotraitement opère à une température comprise entre 250 et 420°C, à une pression totale comprise entre 4 MPa et 15 MPa avec un ratio volume d'hydrogène par volume de charge hydrocarbonée compris entre 200 et 2000 litres par litre et à une Vitesse Volumique Horaire (WH) définie par le rapport du débit volumique de charge hydrocarbonée liquide par le volume de catalyseur chargé dans le réacteur comprise entre 0,5 et 5 h⁻¹.

10. Procédé selon l'une des revendications 1 à 9 dans lequel les support utilisée dans le catalyseur présente la distribution poreuse suivante, mesurée par porosimétrie au mercure :
- le pourcentage de volume compris dans les pores de taille comprise entre 2 et 8 nm par rapport au volume poreux total, est compris entre 20 à 40%,
- le pourcentage de volume compris dans les pores de taille comprise entre 8 et 20 nm par rapport au volume poreux total, est compris entre 50 à 65%,
- le pourcentage de volume compris dans les pores de taille comprise entre 20 et 50 nm par rapport au volume poreux total, est inférieur à 10%,
- le pourcentage de volume compris dans les pores de taille comprise entre 50 et 7000 nm par rapport au volume poreux total, est inférieur à 10%, et de préférence inférieur à 6%.

11. Procédé selon l'une des revendications 1 à 10 dans lequel ladite alumine présente un volume mésoporeux mesuré par porosimétrie au mercure, compris entre 0,6 et 0,8 ml/g.

12. Procédé selon l'une des revendications 1 à 11 dans lequel ledit catalyseur présente la distribution poreuse suivante déterminé par prosimètre au mercure:
- le pourcentage de volume compris dans les pores de taille inférieure à 8 nm par rapport au volume poreux total, est compris entre 20 à 40%,
- le pourcentage de volume compris dans les pores de taille comprise entre 8 et 20 nm par rapport au volume poreux total, est compris entre 40 à 65%,
- le pourcentage de volume compris dans les pores de taille comprise entre 20 et 50 nm par rapport au volume poreux total, est inférieur à 10%,
- le pourcentage de volume compris dans les pores de taille comprise entre 50 et 7000 nm par rapport au volume poreux total, est inférieur à 10%, et de préférence inférieur à 5%.

13. Procédé selon l'une des revendications 1 à 12 dans lequel ledit catalyseur présente un volume mésoporeux mesuré par porosimétrie au mercure entre 0,1 et 0,6 ml/g.

## Patentansprüche

1. Verfahren zur Hydrobehandlung mindestens einer Kohlenwasserstoffcharge, das eine gewichtete mittlere Temperatur (TMP) von mehr als 380 °C aufweist, bei einer Temperatur im Bereich zwischen 250 °C und 430 °C, bei einem Gesamtdruck im Bereich zwischen 4 MPa und 20 MPa mit einem Verhältnis von Wasserstoffvolumen zu Volumen der Kohlenwasserstoffcharge im Bereich zwischen 200 und 2.000 Liter pro Liter und einer Raumgeschwindigkeit pro Stunde (VHS), definiert durch das Verhältnis des Volumenstroms der flüssigen Kohlenwasserstoffcharge zum Volumen des in den Reaktor geladenen Katalysators, im Bereich zwischen 0,5 und 5 h⁻¹ arbeitet, wobei das Verfahren mindestens einen Katalysator verwendet, der mindestens ein Metall der Gruppe VIB und/oder mindestens ein Metall der Gruppe VIII des Periodensystems der Elemente und einen Träger umfasst, der ein mesoporöses amorphes Aluminiumoxid umfasst, wobei das Verfahren mindestens die folgenden Schritte zur Herstellung des Aluminiumoxids umfasst:
a) mindestens einen ersten Schritt a) zum Ausfällen von Aluminiumoxid in wässrigem Reaktionsmedium, mindestens einem basischen Vorläufer, ausgewählt aus Natriumaluminat, Kaliumaluminat, Ammoniak, Natriumhydroxid und Kaliumhydroxid und mindestens ein saurer Vorläufer, ausgewählt aus Aluminiumsulfat, Aluminiumchlorid, Aluminiumnitrat, Schwefelsäure, Chlorwasserstoffsäure und Salpetersäure, wobei mindestens einer der basischen oder sauren Vorläufer Aluminium umfasst, wobei der jeweilige Durchfluss der sauren und basischen Vorläufer derart ausgewählt ist, dass ein pH-Wert des Reaktionsmediums im Bereich zwischen 8,5 und 10,5 erhalten wird und der Durchfluss des oder der sauren und basischen Vorläufer, der/die Aluminium enthält/enthalten, derart eingestellt ist, dass eine Fortschrittsrate des ersten Schritts im Bereich zwischen 40 und 100 % erhalten wird, wobei die Fortschrittsrate definiert ist als der Anteil an Aluminiumoxid, gebildet als Al₂O₃-Äquivalent während des Schritts a} zum Ausfällen, bezogen auf die Aluminiumoxidgesamtmenge, die am Ende des oder der Ausfällungsschritts(e) gebildet wird, wobei Schritt a) bei einer Temperatur im Bereich zwischen 10 und 50 °C, und für eine Dauer im Bereich zwischen 2 Minuten und 30 Minuten arbeitet.
b) einen Schritt zur Wärmebehandlung der am Ende von Schritt a) erhaltenen Suspension bei einer Temperatur im Bereich zwischen 50 und 200 °C während einer Dauer im Bereich zwischen 30 Minuten und 5 Stunden,
c) einen Schritt zum Filtrieren der am Ende von Schritt b) zur Wärmebehandlung erhaltenen Suspension, gefolgt von mindestens einem Schritt zum Waschen des erhaltenen Gels,
d) ein Schritt zum Trocknen des in Schritt c) erhaltenen Aluminiumoxidgels zum Erhalt eines Pulvers,
e) einen Schritt zum Formen des in Schritt d) erhaltenen Pulvers zur Gewinnung des Rohmaterials,
f) einen Schritt zur Wärmebehandlung des am Ende von Schritt e) erhaltenen Rohmaterials bei einer Temperatur im Bereich zwischen 500 und 1.000 °C in Gegenwart oder Abwesenheit eines Luftstroms, der bis zu 60 Vol.-% Wasser enthält.

2. Verfahren nach Anspruch 1, wobei die Kohlenwasserstoffcharge ausgewählt ist aus Vakuumdestillaten, Abflüssen aus einer Einheit zum katalytischen Cracken FCC, leichten Gasölen aus einer Einheit zum katalytischen Cracken, Ölen aus einem schweren Schnitt, paraffinischen Abflüssen aus der Fischer-Tropsch-Synthese, Abflüssen aus der Vakuumdestillation, Abflüssen aus einem Kohleverflüssigungsverfahren, Chargen aus Biomasse oder Abflüssen, die aus der Umwandlung von Biomasseeinsätzen stammen, und Aromatenextrakten und Chargen, die aus Aromatenextraktionseinheiten stammen, allein oder im Gemisch.

3. Verfahren nach einem der Ansprüche 1 oder 2, wobei die Elemente der Gruppe VIII ausgewählt sind aus Cobalt und Nickel, allein oder im Gemisch.

4. Verfahren nach einem der Ansprüche 1 bis 3, wobei die Elemente der Gruppe VIB ausgewählt sind aus Wolfram und Molybdän, allein oder im Gemisch.

5. Verfahren nach einem der Ansprüche 1 bis 4, wobei der Träger des Katalysators ein mesoporöses amorphes Aluminiumoxid umfasst, das eine Konnektivität (Z) im Bereich zwischen 3 und 7 aufweist.

6. Verfahren nach einem der Ansprüche 1 bis 5, wobei das Verfahren zur Hydrobehandlung gemäß der Erfindung stromaufwärts einer Einheit zum Hydrocracken der Kohlenwasserstoffcharge eingesetzt wird.

7. Verfahren nach Anspruch 6, wobei das Verfahren zur Hydrobehandlung bei einer Temperatur im Bereich zwischen 350 und 430 °C, bei einem Gesamtdruck im Bereich zwischen 8 Mpa und 20 MPa mit einem Verhältnis von Wasserstoffvolumen zu Volumen der Kohlenwasserstoffcharge im Bereich zwischen 200 und 2.000 Liter pro Liter und bei einer Raumgeschwindigkeit pro Stunde (HSV), definiert durch das Verhältnis des Volumenstroms des flüssigen Kohlenwasserstoffchargen zum Volumen des in den Reaktor geladenen Katalysators im Bereich zwischen 0,5 und 5 h⁻¹ arbeitet.

8. Verfahren nach einem der Ansprüche 1 bis 5, wobei das Verfahren zur Hydrobehandlung gemäß der Erfindung stromaufwärts einer Einheit zum katalytischen Cracken in der Wirbelschicht der Kohlenwasserstoffcharge eingesetzt wird.

9. Verfahren nach Anspruch 8, wobei das Verfahren zur Hydrobehandlung bei einer Temperatur im Bereich zwischen 250 und 420 °C, bei einem Gesamtdruck im Bereich zwischen 4 Mpa und 15 MPa mit einem Verhältnis Wasserstoffvolumen zu Volumen der Kohlenwasserstoffcharge im Bereich zwischen 200 und 2.000 Liter pro Liter und bei einer Raumgeschwindigkeit pro Stunde (HSV), definiert durch das Verhältnis des Volumenstroms des flüssigen Kohlenwasserstoffcharge zum Volumen des in den Reaktor geladenen Katalysators im Bereich zwischen 0,5 und 5 h⁻¹ arbeitet.

10. Verfahren nach einem der Ansprüche 1 bis 9, wobei der Träger, der in dem Katalysator verwendet wird, die folgende Porenverteilung aufweist, gemessen mittels Quecksilberporosimetrie:
- der Volumenprozentanteil, der in den Poren mit einer Größe im Bereich zwischen 2 und 8 nm enthalten ist, bezogen auf das Gesamtporenvolumen, liegt im Bereich zwischen 20 bis 40 %,
- der Volumenprozentanteil, der in den Poren mit einer Größe im Bereich zwischen 8 und 20 nm enthalten ist, bezogen auf das Gesamtporenvolumen, liegt im Bereich zwischen 50 bis 65 %,
- der Volumenprozentanteil, der in den Poren mit einer Größe im Bereich zwischen 20 und 50 nm enthalten ist, bezogen auf das Gesamtporenvolumen, ist kleiner als 10 %,
- der Volumenprozentanteil, der in den Poren mit einer Größe im Bereich zwischen 50 und 7.000 nm enthalten ist, bezogen auf das Gesamtporenvolumen, ist kleiner als 10 %, und vorzugsweise kleiner als 6 %.

11. Verfahren nach einem der Ansprüche 1 bis 10, wobei das Aluminiumoxid ein Mesoporenvolumen, gemessen mittels Quecksilberporosimetrie, im Bereich zwischen 0,6 und 0,8 ml/g aufweist,

12. Verfahren nach einem der Ansprüche 1 bis 11, wobei der Katalysator die folgende Porenverteilung, bestimmt mittels Quecksilberporosimeter, aufweist:
- der Volumenprozentanteil, der in den Poren mit einer Größe kleiner 8 nm enthalten ist, bezogen auf das Gesamtporenvolumen, liegt im Bereich zwischen 20 bis 40 %,
- der Volumenprozentanteil, der in den Poren mit einer Größe im Bereich zwischen 8 und 20 nm enthalten ist, bezogen auf das Gesamtporenvolumen, liegt im Bereich zwischen 40 bis 65 %,
- der Volumenprozentanteil, der in den Poren mit einer Größe im Bereich zwischen 20 und 50 nm enthalten ist, bezogen auf das Gesamtporenvolumen, ist kleiner als 10 %,
- der Volumenprozentanteil, der in den Poren mit einer Größe im Bereich zwischen 50 und 7.000 nm enthalten ist, bezogen auf das gesamte Porenvolumen, ist kleiner als 10 % und vorzugsweise kleiner als 5 %.

13. Verfahren nach einem der Ansprüche 1 bis 12, wobei der Katalysator ein Mesoporenvolumen, gemessen mittels Quecksilberporosimetrie, zwischen 0,1 und 0,6 ml/g aufweist,

## Claims

1. Process for hydrotreatment of at least one hydrocarbon feedstock having a weighted average temperature (WAT) of more than 380°C operating at a temperature of between 250°C and 430°C, at a total pressure of between 4 MPa and 20 MPa with a ratio of volume of hydrogen to volume of hydrocarbon feedstock of between 200 and 2 000 litres per litre and at an Hourly Volume Velocity (HW) defined by the ratio of the volume flow of liquid hydrocarbon feedstock to the volume of catalyst fed into the reactor of between 0.5 and 5 h-1, said process using at least one catalyst containing at least one metal from Group VIB and/or at least one metal from Group VIII of the periodic table and a support containing an amorphous mesoporous alumina, said process comprising at least the following steps of preparation of said alumina :
a) at least one first step a) of alumina precipitation, in aqueous reaction medium, of at least one basic precursor selected from among sodium aluminate, potassium aluminate, ammonia, sodium hydroxide and potassium hydroxide and at least one acid precursor selected from among aluminium sulphate, aluminium chloride, aluminium nitrate, sulphuric acid, hydrochloric acid, and nitric acid, wherein at least one of the basic or acid precursors comprises aluminium, the relative flow of the acid and basic precursors is selected in order to obtain a pH of the reaction medium of between 8.5 and 10.5 and the flow of the acid and basic precursor(s) containing aluminium is adjusted in order to obtain a rate of progress of the first step of between 40 and 100%, the rate of progress being defined as being the alumina formed as equivalent Al₂O₃ in said precipitation step a) as a proportion of the total quantity of alumina formed in the precipitation step(s), said step a) operating at a temperature of between 10 and 50 °C, and for a period of between 2 minutes and 30 minutes,
b) a step for thermal treatment of the suspension obtained in step a) at a temperature of between 50 and 200°C for a period of between 30 minutes and 5 hours,
c) a step for filtration of the suspension obtained from thermal treatment step b), followed by at least one washing step of the gel obtained,
d) a step for drying the alumina gel obtained in step c) for obtaining a powder,
e) a step for shaping the powder obtained in step d) for obtaining the raw material,
f) a step for thermal treatment of the raw material obtained in step e) at a temperature of between 500 and 1 000°C, in the presence or not of an air flow containing up to 60 vol.% of water.

2. Process according to Claim 1, wherein said hydrocarbon feedstock is selected from among the vacuum distillates, effluents produced by a Fluid Catalytic Cracking (FCC) unit, light cycle oil produced in a catalytic cracking unit, heavy cycle oil, paraffin effluents produced by Fischer-Tropsch synthesis, effluents produced by vacuum distillation, effluents produced by coal liquefaction processes, feedstocks from biomass or effluents resulting from the conversion of feedstocks from biomass, and aromatic extracts and feedstocks from aromatic extraction units, alone or in a mixture.

3. Process according to any one of Claims 1 or 2, wherein the Group VIII elements are cobalt and nickel, alone or in a mixture.

4. Process according to any one of Claims 1 to 3, wherein the Group VIB elements are selected from among tungsten and molybdenum, alone or in a mixture.

5. Process according to any one of Claims 1 to 4, wherein catalyst support contains an amorphous mesoporous alumina having a connectivity (Z) of between 3 and 7.

6. Process according to any one of Claims 1 to 5, wherein said hydrotreatment process according to the invention is implemented upstream of a unit for hydrocracking of said hydrocarbon feedstock.

7. Process according to Claim 6, wherein said hydrotreatment process operates at a temperature of between 350 and 430°C, at a total pressure of between 8 MPa and 20 MPa with a ratio of volume of hydrogen to volume of hydrocarbon feedstock of between 200 and 2 000 litres per litre and at an Hourly Volume Velocity (HVV) defined by the ratio of the volume flow of liquid hydrocarbon feedstock to the volume of catalyst fed into the reactor of between 0.5 and 5 h⁻¹.

8. Process according to any one of Claims 1 to 5, wherein said hydrotreatment process according to the invention is implemented upstream of a unit for fluidised bed catalytic cracking of said hydrocarbon feedstock.

9. Process according to Claim 8, wherein said hydrotreatment process operates at a temperature of between 250 and 420°C, at a total pressure of between 4 MPa and 15 MPa with a ratio of volume of hydrogen to volume of hydrocarbon feedstock of between 200 and 2 000 litres per litre and at an Hourly Volume Velocity (HW) defined by the ratio of the volume flow of liquid hydrocarbon feedstock to the volume of catalyst fed into the reactor of between 0.5 and 5 h⁻¹.

10. Process according to any one of Claims 1 to 9, wherein the support used in the catalyst has the following pore size distribution, measured by mercury porosimetry:
- the percentage volume included in the pores of a size between 2 and 8 nm in relation to the total pore volume, is between 20 and 40%,
- the percentage volume included in the pores of a size between 8 and 20 nm in relation to the total pore volume, is between 50 and 65%,
- the percentage volume included in the pores of a size between 20 and 50 nm in relation to the total pore volume, is less than 10%,
- the percentage volume included in the pores of a size between 50 and 7 000 nm in relation to the total pore volume, is less than 10%, and by preference less than 6 %.

11. Process according to any one of Claims 1 to 10, wherein said alumina has a mesopore volume measured by mercury porosimetry of between 0.6 and 0.8 ml/g.

12. Process according to any one of Claims 1 to 11, wherein said catalyst has the following pore size distribution determined by mercury porosimeter:
- the percentage volume included in the pores of a size less than 8 nm in relation to the total pore volume, is between 20 and 40%,
- the percentage volume included in the pores of a size between 8 and 20 nm in relation to the total pore volume, is between 40 and 65%,
- the percentage volume included in the pores of a size between 20 and 50 nm in relation to the total pore volume, is less than 10%,
- the percentage volume included in the pores of a size between 50 and 7 000 nm in relation to the total pore volume, is less than 10%, and by preference less than 5 %.

13. Process according to any one of Claims 1 to 12, wherein said catalyst has a mesopore volume measured by mercury porosimetry of between 0.1 and 0.6 ml/g.
